# EUROPÄISCHE PATENTSCHRIFT

(11) **EP 2 633 307 B1**
(45) Veröffentlichungstag und Bekanntmachung des Hinweises auf die Patenterteilung: **01.01.2020**
(21) Anmeldenummer: 11771036.8
(22) Anmeldetag: 18.10.2011
(51) Int. Cl.: G01N 30/60, B01D 15/22

(54) **VORRICHTUNG ZUR CHROMATOGRAPHISCHEN AUFTRENNUNG EINES STOFFGEMISCHES UND DEREN VERWENDUNG**
DEVICE FOR THE CHROMATOGRAPHIC SEPARATION OF A SUBSTANCE MIXTURE AND USE THEREOF
DISPOSITIF DE SÉPARATION CHROMATOGRAPHIQUE D'UN MÉLANGE DE SUBSTANCES ET SON UTILISATION

(30) Priorität: 29.10.2010 DE 102010049789
(43) Veröffentlichungstag der Anmeldung: 04.09.2013
(73) Patentinhaber: Fresenius Medical Care Deutschland GmbH, 61352 Bad Homburg v.d.H. (DE)
(72) Erfinder: LEINENBACH, Hans-Peter, 3500 Krems-Rehberg (AT); GERNER, Franz-Josef, 66606 St. Wendel (DE); KUHN, Stefan, 66538 Neunkirchen (DE); PRIESNITZ, Patrick, 66606 St. Wendel (DE)
(74) Vertreter: Weiß, Stefan
(86) Internationale Anmeldenummer: PCT/EP2011/005217
(87) Internationale Veröffentlichungsnummer: WO 2012/055499

(56) Entgegenhaltungen:
- EP-A2- 0 106 419
- US-A- 4 722 786
- US-A1- 2009 321 338

## Beschreibung

Die Erfindung betrifft eine Vorrichtung zur chromatographischen Auftrennung eines Stoffgemisches, welches als Gehäuse ausgebildet ist und im mittleren Teilbereich ein Trennmedium enthält. Im oberen Teilbereich der Vorrichtung befindet sich ein radialer Zuleitkanal für das zu trennende Fluid, der sich bis zum Zentrum des oberen Teilbereichs erstreckt und dieses kuppelförmig erweitert. Das Gehäuse verfügt im unteren Teilbereich über einen Ableitkanal. Innerhalb der Vorrichtung dienen Trennelemente dazu, den oberen und unteren Teilbereich von dem Trennmedium abzugrenzen. Dabei erlaubt die erfindungsgemäße konstruktive Ausgestaltung der Vorrichtung eine gleichmäßige Fluidverteilung und eine im Wesentlichen zeitgleiche Durchströmung des Trennmediums.

Um bei chromatographischen Trennverfahren eine gute Trennleistung zu erreichen, ist eine gleichmäßige Verteilung des zu trennenden Fluids auf dem Trennmedium sowie eine zeitgleiche Durchströmung des Trennmediums erforderlich. Die bekannten Vorrichtungen finden in vielen Bereichen Anwendung, wie z.B. im technischen, analytischen, medizinischen und pharmazeutischen Bereich.

Derartige chromatographische Vorrichtungen bestehen aus einem Gehäuse oder einer Säule, welche üblicherweise in einen oberen, unteren und mittleren Teilbereich untergliedert sind. Im mittleren Teilbereich befindet sich in der Regel das Trennmedium, welches auch als stationäre Phase oder Adsorbens bezeichnet werden kann. Die stationäre Phase besteht normalerweise aus einem Feststoff, einem Gel oder einer auf einem Träger aufgebrachten Substanz.

Das Trennmedium wird von dem zu trennenden Medium oder Fluid, das auch als mobile Phase bezeichnet wird, durchströmt. Dabei kann das Stoffgemisch der mobilen Phase flüssig und/oder mit Schweb- oder Feststoffen beladen sein.

Die oberen und/oder unteren Teilbereiche verfügen bei bestimmten Anwendungsarten über einen freien Raum, der diese von dem Trennmedium, der sogenannten stationären Phase, abgrenzt. Um das Trennmedium im mittleren Teilbereich zu fixieren sind häufig Trennelemente, bestehend aus Sieben oder Netzen, vorgesehen. Diese sind vielfach in Kombination mit Stützstrukturen zur Verbesserung der Stabilität sowie mit besonderen Einbauten ausgerüstet, die eine verbesserte Fluidcharakteristik ermöglichen sollen.

Die oberen bzw. unteren Teilbereiche können durch eine obere bzw. untere Verschlussvorrichtung, die als Endkappe oder -deckel ausgebildet sein kann, verschlossen werden.

Der Zu- bzw. Ablauf des zu trennenden Mediums kann sowohl axial als auch radial erfolgen.

Aus dem Stand der Technik sind bereits zahlreiche chromatographische oder adsorptive Vorrichtungen bekannt.

So beschreibt die EP 0 507 245 B1 ein Adsorbergehäuse mit einer Verteileranordnung, die trichterförmig ausgebildet ist und sich zur Gehäusemitte konisch verjüngt. Dadurch wird eine schnelle und/oder vollständige Sedimentierung des Trennmediums und eine verbesserte Trennung der aufzutrennenden Lösung erreicht.

Die US 2001/002581 A1 beschreibt den Aufbau eines Filtergehäuses, bei dem ein Filter um ein zylindrisches Rohr oder in einem zylindrischen Rohr angeordnet ist. Die Fluidzu- und ableitung erfolgt radial, wobei das Zuleitungsrohr und das Auslassrohr auf gleicher Höhe liegen. Aus den Zeichnungen geht hervor, dass das aufgetrennte Fluid vor dem Auslassrohr einen glockenförmigen Raum durchströmt, der einen Gasraum bildet, über den die Entlüftung des Filtersystems erfolgt.

Aus der EP 1 574 244 A2 ist eine Endkappe für eine Filtervorrichtung mit einem radialen Zu- oder Ablauf bekannt. In der Endkappe sind Führungselemente vorgesehen, durch die das Fluid eine Richtungsumkehrung erfährt. Die Führungselemente sind im Bereich eines im Wesentlichen kreis- oder teilkreisförmigen Kanals angeordnet.

Die Anmeldung WO 03/005018 A1 beschäftigt sich mit der Optimierung von Fluidverteilungssystemen, wobei die für Filtersysteme verwendeten Fluid-Verteilerstrukturen mit einem Netz zum Zurückhalten des Trennmediums fest verbunden werden. Damit sollen hygienische Probleme und die Bildung von Todvolumina vemieden sowie eine verbesserte Flusscharakteristik des zu trennenden Fluids erreicht werden.

Die DE 10 2008 053 131 A1 beschreibt ein Verfahren und eine Anordnung zum Sterilisieren eines Adsorbergehäuses und des Adsoberns, wobei das Adsorbergehäuse und das zu sterilisierende Adsorbens separat vorliegen, aber über eine Verbindungseinrichtung ein geschlossenes System bilden.

Die US 2009/0321338 offenbart eine Chromatographieapparatur, die zwischen Kopf- bzw. Bodenbereich und der oberen bzw. unteren Fritte einen freien Raum ausbildet, in den der Fluidzu- bzw. Fluidablauf mündet.

Die US 4722786 zeigt eine Chromatographiesäule, die einen zentralen, gewölbten Teil aufweist durch den die Einlassleitung eintritt.

Die EP 0106419 beschreibt eine Chromatographieapparatur, wobei das Fluid tangential in einen kegelförmigen oberen Bereich der Apparatur eingebracht wird.

In der therapeutischen Immun-Apherese kommen Systeme zum Einsatz, bei denen entweder kleinvolumige Gehäuse oder aufwändige größere Gehäuse z.B. aus Glas verwendet werden.

Nachteilig bei diesen Systemen ist, dass sie sehr teuer und als Multi-Use-Anwendungen ausgelegt sind. Die Multi-Use-Systeme bergen darüber hinaus noch die Gefahr einer Kontamination durch ihren mehrmaligen Einsatz am Patienten und dadurch, dass sie zwischen den einzelnen Behandlungen in Konservierungslösungen gelagert werden müssen.

Bei Systemen, in denen während der Behandlung die beladenen Säulen mehrmals regeneriert werden, kommt es zu Verdünnungseffekten und zu Plasmaverwürfen. Diese Nachteile sind immer dann besonders kritisch, wenn:
- hohe Regenerationszyklen pro Behandlung und/oder
- größere Säulenvolumen notwendig sind.

Die bei Einwegsystemen eingesetzten Säulen werden innerhalb einer Behandlung nicht regeneriert. Dadurch tritt die Gefahr von Plasmaverdünnungen und/oder Plasmaverlusten hier nur in geringem Maße oder gar nicht auf.

Bestehende Einwegsysteme, wie zum Beispiel mit Aminosäureliganden arbeitende Adsorber, sind aufgrund ihrer niedrigen Bindungskapazitäten sowie ihrer unzureichenden Selektivitäten nur für bestimmte Indikationen geeignet.

Bei Trennmedien mit geringer Bindungskapazität ist der Einsatz von größeren Säulenvolumina erforderlich. Größere Volumina sind jedoch nur mit gleichzeitig größeren Durchmessern der Gehäuse realisierbar, da ansonsten die Behandlungsdauer unverhältnismäßig ansteigt.

Eine Vergrößerung des Gehäusedurchmessers ermöglicht zwar hohe Plasmavolumenflussraten es treten jedoch Verteilungsprobleme auf, die dazu führen, dass das zu prozessierende Fluid zeitlich unterschiedlich in das Trennmedium eintritt. In diesen Fällen kommt es zur Verschleppung von Plasma und dadurch zu unerwünschten Verdünnungen. Besonders bei einem seitlich angeströmten Säulenbett erhöht sich diese Gefahr.

Werden dagegen Säulen mit kleinem Durchmesser eingesetzt, ist es erforderlich höhere Plasmaflüsse zu fahren. Dabei besteht die Gefahr, dass die Bindungskapazität herabgesetzt wird, da sich in diesem Fall der lineare Fluss (cm/min) erhöht und die Zeit für die intramolekulare Wechselwirkung der Bindungspartner zu kurz wird. Zusätzlich erhöht sich die Gefahr eines zu hohen Adsorber- oder Säulendruckes während der Spülphase, da diese mit wesentlich höheren Volumenflussraten durchgeführt wird.

Der Erfindung liegt nun die Aufgabe zugrunde, eine multifunktionale Vorrichtung zur chromatographischen, insbesondere zur affinitätschromatographischen Auftrennung eines Stoffgemisches zur Verfügung zu stellen, die eine gleichmäßige Fluidverteilung auf dem Trennmedium und eine gleichmäßige Durchströmung der stationären Phase ermöglicht, so dass damit die Nachteile der bisherigen Systeme ausgeräumt werden können. Gleichzeitig soll die Vorrichtung über eine flache Bauweise verfügen.

Eine weitere Aufgabe der Erfindung ist es, eine solche Vorrichtung zur Verfügung zu stellen, die den Einsatz als Einmalartikel erlaubt.

Darüber hinaus soll die Vorrichtung kostengünstig, einfach herstellbar sowie leicht und sicher handhabbar sein.

Die Aufgabe wird erfindungsgemäß durch die Merkmale des Anspruchs 1 gelöst. Dabei wird das zu trennende Fluid über eine radiale Zuleitung im oberen Teilbereich der Vorrichtung bis zu dessen Zentrum geführt, welcher nach dem Eintritt in das Gehäuseinnere zum Gehäuseinnenraum offen ist. Im Zentrum des oberen und/oder unteren Teilbereichs erweitert sich der Zuleitkanal kuppelförmig in Form eines flachen Kugelsegments..

Vorteilhafte Ausführungsformen der Erfindung ergeben sich aus den Unteransprüchen.

Überraschenderweise wurde gefunden, dass durch die kuppelförmige Erweiterung eine Verlangsamung der Fluidverteilung auf der gegenüberliegenden Seite der Einströmungsöffnung erreicht wird. Mit der erfindungsgemäßen Konstruktion wird verhindert, dass das zu trennende Fluid ungebremst auf die der Einströmungsöffnung gegenüberliegende Gehäusewand aufprallt und bereits in das Trennmedium eindringt, während das zu trennende Fluid an der einströmungsnahen Seite nur verzögert in das Trennmedium eintritt. Dadurch wird ein nahezu zeitgleicher Eintritt des zu trennenden Fluids auf der gesamten Oberfläche des Trennmediums erreicht, woraus eine im Wesentlichen gleichmäßige Durchströmung des Fluids durch das Trennmedium resultiert.

Durch die kuppelförmige Ausbildung der radialen Zuleitung im Gehäusezentrum ist es möglich, großvolumige Trennvorrichtungen zu verwenden, ohne dass die oben dargelegten nachteiligen Effekte auftreten.

Im Folgenden werden die verschiedenen Ausführungsbeispiele der Erfindung unter Bezugnahme auf die Zeichnungen näher erläutert.
Fig. 1 zeigt eine schematische Darstellung der erfindungsgemäßen Vorrichtung.
Fig. 2 zeigt einen oberen und/oder unteren Teilbereich der erfindungsgemäßen Vorrichtung einschließlich eines Trennelements mit Stützstruktur.
Fig. 3 zeigt den äußeren oberen Teilbereich der erfindungsgemäßen Vorrichtung

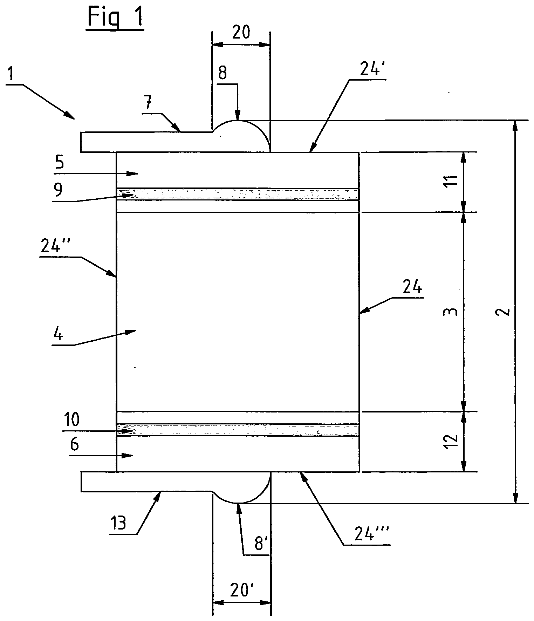

Wie aus Fig. 1 ersichtlich ist, umfasst die erfindungsgemäße Vorrichtung (1) ein Gehäuse (2) mit einem mittleren Teilbereich (3), der das Trennmedium (4) enthält, einem oberen Teilbereich (5) und einem unteren Teilbereich (6). Der obere Teilbereich (5) weist weiterhin einen radialen Zuleitkanal (7) auf, der sich bis zum Zentrum des oberen Teilbereichs (5) erstreckt und in einer kuppelförmigen Erweiterung (8) endet. Der mittlere Teilbereich (3) wird durch Trennelemente (9, 10) von dem oberen und unteren Teilbereich (5, 6) begrenzt. Von dem oberen und/oder unteren Teilbereich (5, 6) bis zu dem Trennmedium (4) erstreckt sich ein freier Raum (11) und (12). Dieser freie Raum ist erforderlich, damit eine Verteilung des zu trennenden Fluids auf dem Trennmedium (4) erfolgen sowie das aufgetrennte Fluid frei ablaufen kann. Die Vorrichtung weist weiterhin einen Ableitkanal (13) im unteren Teilbereich (6) auf. Der Ableitkanal (13) kann in einer für den Fachmann bekannten Weise ausgestaltet sein.

Die konstruktive Ausgestaltung des oberen Teilbereichs (5), bei dem der radiale Zuleitkanal (7) in eine kuppelförmige Erweitung (8) mündet, erlaubt eine gleichmäßige und zeitgleiche Verteilung des zu trennenden Fluids auf der Eintrittsoberfläche des Trennmediums (4). Die herkömmlichen Systeme mit radialem Zulauf sind häufig mit dem Nachteil behaftet, dass die Verteilung des zu trennenden Fluids nicht zeitgleich auf die Oberfläche des Trennmediums auftrifft. Dies führt zu einer ungleichmäßigen Verteilung des zu trennenden Fluids auf der Oberfläche des Trennmediums und einer ungleichmäßigen Durchströmung des zu trennenden Fluids durch das Trennmedium. Dadurch bildet sich eine schräge Lauffront im Trennmedium aus, was zu den oben dargelegten Nachteilen führt.

Die Abmessungen des Zuleitkanals (7), der kuppelförmigen Erweiterung (8) und der Innendurchmesser der Vorrichtung (1) stehen in unmittelbarem Zusammenhang und sind individuell auf die jeweilige Größe der Vorrichtung (1) anzupassen.

So kann in einer besonderen Ausführungsform der Vorrichtung (1) der Innendurchmesser eine Größe von 3 bis 15 cm, vorzugsweise 4 bis 12 cm, besonders bevorzugt von 5 bis 10 cm aufweisen.

Daraus ergibt sich bei der erfindungsgemäßen Vorrichtung (1) für das Trennmedium (4) eine Eintrittsfläche im Bereich von 7 bis 180 cm² vorzugsweise 13 bis 115 cm² , besonders bevorzugt von 20 bis 80 cm², um eine optimale Trennleistung zu gewährleisten.

Die erfindungsgemäße Vorrichtung (1) ist dabei so konzipiert, dass das Gehäuse (2) ein Trennmediumvolumen von 30 bis 1.500 ml, vorzugsweise von 100 bis 1.000 ml aufnehmen kann und sich somit auch für die Verwendung für großvolumige Gehäuse eignet.

Die Packungshöhe des Trennmediums (4) lässt sich anhand der oben angegebenen Größen rechnerisch bestimmen. Allerdings wird die Packungshöhe vorrangig von dem Agens, welches aus dem zu trennenden Fluid entfernt werden soll und der Bindungskapazität des Trennmediums (4) bestimmt.

Bei der Anwendung im medizinischen oder pharmazeutischen Bereich muss die Sterilität der Vorrichtung und des Trennmediums sichergestellt sein. Die Sterilisation erfolgt in der Regel mittels Dampfsterilisation oder energiereicher, ionisierender Strahlung, wie zum Beispiel UV, Röntgen-, alpha-, Gamma- oder E-Beam-Strahlung, wobei die E-Beam-Strahlung bevorzugt wird.

Bei affinitätschromatographischen Anwendungen kommen oftmals Proteine wie z.B. Antikörper, Staphylococcen-Protein A, Protein G o.ä. sowie Peptide als trägergebundene Liganden zum Einsatz. Für die Sterilisation derartiger Trennmedien können nur Bestrahlungsdosen in relativ eng begrenzten Bereichen gewählt werden, da die Trennmedien ansonsten ihre Aktivität verlieren würden. Dabei kann sich das Trennmedium innerhalb des Gehäuses (Endpunktsterilisation) oder außerhalb in einem gesonderten Kompartiment einer Bestrahlungseinheit befinden. Bei Systemen, bei denen eine Endpunktsterilisation vorgesehen ist, spielt die Durchstrahlbarkeit der gesamten gefüllten Vorrichtung eine große Rolle. Eine Endpunktsterilisation kommt daher in der Regel nur bei sterilisationsstabilen und/oder trockenen Trennmedien in Betracht, um eine ausreichende Durchdringung der Strahlung erreichen zu können. Es muss daher eine Balance gefunden werden, bei denen eine ausreichende Sterilität gewährleistet ist und gleichzeitig eine Beeinträchtigung der Aktivität des Trennmediums vermieden wird. Limitierender Faktor der Bestrahlungsdosis stellt somit das im Gehäuse befindliche, zu sterilisierende Trennmedium oder Adsorbermaterial dar.

Für eine ausreichende Sterilität muss in der gesamten Vorrichtung (1) eine Mindeststrahlendosis von 25 kGy erreicht werden. Dies gilt sowohl für Vorrichtungen, die einer Endpunktsterilisation unterzogen werden, als auch für Vorrichtungen, bei denen sich das Trennmedium in einem separaten Behältnis befindet. Die Höchstdosis der Bestrahlung ist von den jeweiligen Eigenschaften des eingesetzten Trennmediums abhängig, wobei die Bestrahlungshöchstdosis einen Wert von ca. 34 kGy gewöhnlich nicht überschreitet.

In einer besonders bevorzugten Ausführungsform ist es durch eine radiale Zu- und Ableitung (7, 13) des zu trennenden Fluids möglich, für die Außenflächen (24, 24', 24", 24''') der erfindungsgemäßen Vorrichtung (1) Schichtdicken ab 2,5 mm, vorzugsweise ab 1,5 mm, vorzusehen. Eine solche dünne Gehäusegeometrie erlaubt eine Endpunktsterilisation mit ionisierender Strahlung, selbst dann, wenn es sich um sterilisationslabilere Trennmedien handelt.

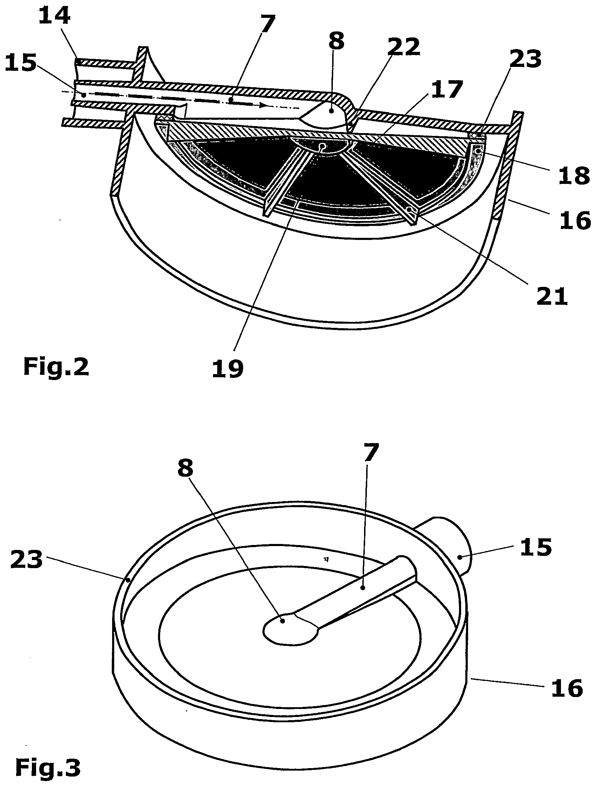

Fig. 2 stellt einen oberen Teilbereich (5) der erfindungsgemäßen Vorrichtung (1) dar, wobei der radiale Zuleitkanal (7) im Zentrum der Vorrichtung (1) in einer kuppelförmigen Erweiterung (8) endet. Die kuppelförmige Erweiterung (8) ist in Form eines flachen Kugelsegments ausgebildet.

In einer besonderen Ausführungsform kann der Kugelinnendurchmesser der kuppelförmigen, vorzugsweise kugelsegmentförmigen Erweiterung (8) im Bereich von 4 bis 20 mm, vorzugsweise von 8 bis 16 mm, liegen.

Weiterhin kann der Zuleitkanal (7), der sich im Zentrum des oberen Teilbereichs (5) der Vorrichtung kugeisegmentförmig erweitert, einen Lumendurchmesser von maximal 5 mm, vorzugsweise von maximal 4,2 mm aufweisen.

Üblicherweise werden zum Anschluss des Zuleitkanals an eine Schlauchverbindung Luer oder Luer-Lock Anschlüsse verwendet. In einer besonders bevorzugten Ausführungsform ist der Zuleitkanal derart ausgestaltet, dass er sich, ausgehend von einem genormten Luer oder Luer-Lock Durchmesser der Anschlussseite zur kugelsegmentförmigen Erweiterung hin, konisch verjüngt.

Der Zuleitkanal (7) ist nach dem Eintritt in das Gehäuseinnere zum Gehäuseinnenraum offen, um die gleichmäßige und zeitgleiche Verteilung des zu trennenden Mediums weiter zu optimieren. Dabei können die definierten Größen und Abmessungen beibehalten werden.

In einer besonders bevorzugten Ausführungsform kann als eine weitere konstruktive Ausgestaltung der Vorrichtung (1) ein Trennelement (17) vorgesehen werden. Das Trennelement (17) ist unterhalb der kugelsegmentförmigen Erweiterung (8) angebracht. Für solche Trennelemente werden üblicherweise Siebe, Netze oder dergleichen eingesetzt, die dazu dienen, das Trennmedium (4) im mittleren Teilbereich (3) des Gehäuses (2) zu fixieren. Dabei werden die als Trennelemente (17) eingesetzten Siebe oder Netze häufig zur Stabilisierung auf eine Stützstruktur (18) aufgebracht. Das Trennelement (17) kann mit der Stützstruktur (18) verschweißt oder verklebt werden um eine einstückige Einheit zu bilden. Das Aufbringen einer Stützstruktur (18) auf die als Sieb oder Netz ausgebildeten Trennelemente (17) kann im Spritzgussverfahren erfolgen.

Die Stützstruktur (18) kann aus Polycarbonat (PC), Polyethylen (PE), Polypropylen (PP), Polystyrol (PS), Polyvinylchlorid (PVC), Polyethylenterephthalat (PET), Polybutylenterephthalat (PBT), Acrylnitril-Butadien-Styrol (ABS), Polyamid (PA) und/oder Copolyester bestehen. Dadurch ist eine einfache und kostengünstige Herstellung der Trennelemente (17) einschließlich Stützeinrichtung (18) möglich.

Die Stützstruktur (18) zeichnet sich darüber hinaus dadurch aus, dass sich im Zentrum der Stützstruktur (18) als integraler Bestandteil ein Verteilerelement (19) befindet, welches auch als Prallplatte bezeichnet werden kann und als geschlossene Fläche ausgebildet ist. Das Verteilerelement (19) liegt der kugelsegmentförmigen Erweiterung (8) gegenüber. Das zentrale Verteilerelement (19) ist für das aus der kuppelförmigen Erweiterung (8) herabströmende zu trennende Fluid undurchlässig und unterstützt dadurch die zeitgleiche und gleichmäßige Verteilung des zu trennenden Fluids auf der Oberfläche des Trennmediums (4), so dass eine nahezu horizontale Lauffront im Trennmedium (4) erzielt wird.

Dabei zeichnet sich die Vorrichtung (1) dadurch aus, dass
- der Durchmesser des geschlossenen, zentralen Verteilerelements (19) eine Größe von 10 bis 25 mm, vorzugsweise von 16 bis 18 mm und
- der Innendurchmesser (20) der offenen Seite der kugelsegmentförmigen Erweiterung (8) eine Größe von 4 bis 12 mm, vorzugsweise von 6 bis 8 mm aufweisen kann.

Aus den Durchmessern des geschlossenen, zentralen Verteilerlements (19) zu den Innendurchmessern (20) der offenen Seite der kugelsegmentförmigen Erweiterung (8) lässt sich ein Verhältniswert berechnen.

So ergibt sich aus
- dem Durchmesser des geschlossenen, zentralen Verteilerelements (19) und
- dem Innendurchmesser (20) der offenen Seite der kugelsegmentförmigen Erweiterung (8) ein Verhältnis im Bereich von 2,6/1 bis 2,3/1 betragen, besonders bevorzugt von 2,5/1 bis 2/1.

Der Innendurchmesser (20) der offenen Seite der kugelsegmentförmigen Erweiterung (8) kann im Verhältnis zum Lumendurchmesser des Zuleitkanals (7) im Bereich von 0,5/1 bis 4/1, besonders bevorzugt 1,5/1 bis 3,5/1 betragen.

Da der Durchmesser der Stützeinrichtung (18) und der Innendurchmesser des Gehäuses (2) die gleiche Größe aufweisen, ergibt sich aus
- dem Durchmesser der Stützeinrichtung (18) bzw. dem Innendurchmesser des Gehäuses (2) und
- dem Durchmesser des geschlossenen, zentralen Verteilerelements (19) ein Verhältnis von 6,2/1 bis 2,5/1, bevorzugt von 5,3/1 bis 3,1/1 besonders bevorzugt von 4/1 bis 3,5/1.
- Das zentrale Verteilerelement (19) kann als integraler Bestandteil der Stützstruktur (18) mit wenigstens 2 gegenüberliegenden Streben (21), vorzugsweise 4 bis 8 gegenüberliegende Streben (21) mit dem Randbereich der Stützstruktur (18) verbunden werden.

Die Streben (21) dienen des Weiteren dazu, das üblicherweise flexible Sieb zu stützen. Sie können aber auch zur Fixierung und Positionierung des Verteilerelements (19) genutzt werden.

Die Streben (21) können gleichzeitig als Abstandselemente dienen, so dass das Trennelement (17) und/oder die Stützstruktur (18) nicht direkt auf dem Trennmedium (4) aufliegt. Abstandselemente können aber auch am äußeren Randbereich der Stützstruktur (18) in geeigneter Ausformung angebracht sein.

Um eine ungehinderte und gleichmäßige Fluidströmung im oberen Teilbereich (5) der Vorrichtung (1) zu ermöglichen, sollte das Trennelement (17) und/oder die Stützstruktur (18) nicht an den unteren Rand der kuppelförmigen Erweiterung (8) anstoßen. Dies kann dadurch erreicht werden, dass unterhalb der kugelsegmentförmigen Erweiterung (8) Abstandselemente (22) angebracht sind. Die Abstandselemente (22), zum Beispiel in Form von Spikes, sind vorzugsweise peripher um die kugelsegmentförmige Erweiterung (8) angeordnet.

Eine Beabstandung durch die Abstandselemente (22) kann auch durch eine Erhöhung der ringförmigen Stützstruktur (18) erreicht werden.

In einer weiteren bevorzugten Ausführungsform kann, wie in Fig. 3 dargestellt, der obere Teilbereich (5) als Gehäuseendkappe oder Gehäusedeckel (16) ausgebildet sein. Dabei tritt das zu trennende Medium durch die Einströmöffnung (15) in den Zuleitkanal (7) ein, der sich im Zentrum des Gehäusedeckels (16) kugelsegmentförmig erweitert. Der Gehäusedeckel (16) kann auf den mittleren Teilabschnitt (3) des Gehäuses aufgeschraubt, aufgesteckt oder anderweitig mit dem Gehäuse (2) verbunden werden. Das der kuppelförmigen Erweiterung (8) gegenüberliegende Ende des Zuleitkanals (7) dient zum Anschluss einer Schlauchleitung zum Zuführen des zu trennenden Mediums und kann, wie in Fig. 2 dargestellt, als Luer oder Luer-Lock-Verbindung (14) ausgebildet sein. Die Schlauchleitung kann aber auch direkt aufgesteckt werden.

In einer weiteren bevorzugten Ausführungsform ist der Auslass- oder Ableitkanal (13) zur Ableitung des aufgetrennten Fluids, entsprechend dem Zuleitkanal (7), wie in Fig. 2 dargestellt, ebenfalls radial angeordnet.

In einer besonders bevorzugten Ausführungsform kann sich der Ableitkanal (13) bis zum Zentrum der Vorrichtung (1) erstrecken und ebenfalls in eine kuppelförmige, vorzugsweise kugelsegmentförmige Erweiterung (8') mit einem Innendurchmesser (20'), wie in Fig. 1 gezeigt, übergehen.

In einer ganz besonders bevorzugten Ausführungsform weist der Ableitkanal (13) die gleichen Merkmale und den gleichen Aufbau sowie die gleichen Größenangaben, wie für den Zuleitkanal (7) beschrieben, auf.

Durch die identische Bauweise der oben beschriebenen Ausführungsform wird die Handhabung für den Anwender erleichtert und montagebedingte Bedienungsfehler vermieden, da der Anwender nicht auf eine vorbestimmte Einbaurichtung der Vorrichtung achten muss.

Um die Arbeitsabläufe bei der routinemäßigen Anwendung der Vorrichtung (1) zu verringern (Konservierung, Lagerung, Freispülen und Vorbereitung zum Wiedereinsatz) und/oder zur Vermeidung von Kontaminationen ist es von Vorteil, die Vorrichtung (1) als Einmalartikel vorzusehen.

Die erfindungsgemäße Vorrichtung (1) ist für die Verwendung im technischen, vorzugsweise analytischen, medizinischen und pharmazeutischen Bereich geeignet.

Die Vorrichtung (1) dient insbesondere zur Abreicherung von Substanzen aus einem Stoffgemisch, vorzugsweise zur Abreicherung von Peptiden oder Proteinen, besonders bevorzugt von Cytokinen, Low-Density-Lipoproteinen (LDL), toxischen Fremdproteinen wie zum Beispiel Tiertoxinen. Weiterhin dient die Vorrichtung (1) zur Abreicherung von Antikörpern, wobei es sich sowohl um körpereigene als auch um körperfremde, zum Beispiel therapeutisch wirksame Antikörper handeln kann. Die abzureichernden Substanzen können ebenfalls bakteriellen Ursprungs sein, sowohl von gramnegativen, als auch von grampositiven Bakterien wie zum Beispiel Endotoxine (Lipopolysaccharide) oder Enterotoxine zum Beispiel Toxic shock syndrom toxin -1 (TSST-1) sowie (Staphylococcus auraeus) sowie Staphylococcal enterotoxin B (SEB)

Besonders bevorzugt erfolgt die Abreicherung aus Vollblut oder Blutplasma.

Nachfolgend wird die Erfindung anhand von Versuchsbeispielen näher erläutert.

### Beispiel 1

In einem Modellversuch wurde eine Vorrichtung mit einem Eintrittdurchmesser des Trennmediums von 62 mm verwendet. Dies entspricht einer Eintrittsfläche des zu trennenden Fluids auf dem Trennmedium von rund 30 cm². Mit einer Höhe von 47 mm ergibt sich ein Trennmediumvolumen von 140 ml. Für die stationäre Phase wurde ein affinitätschromatografisches Material auf Methacrylatbasis verwendet.

Die mobile Phase wurde über einen radialen Zuleitkanal bis zum Gehäusemittelpunkt geführt. Der radiale Zuleitkanal verfügte über einen Lumendurchmesser von 4,2 mm und ist nach dem Durchtritt in das Gehäuseinnere nach unten geöffnet. Er erweitert sich im Zentrum des Gehäuses kuppelförmig. Die kuppelförmige Erweiterung wies einen Kugelinnendurchmesser von 17 mm auf. Als mobile Phase wurde eine Phenolphthaleinlösung eingesetzt und mit einer Flussrate von 30 ml/min über den radialen Zuleitkanal eingeströmt. Der Innendurchmesser der nach unten offenen Seite der kuppelförmigen Erweiterung betrug 7 mm.

Die Vorrichtung verfügte weiterhin über ein Trennelement bestehend aus einer Stützstruktur mit einem zentralen Verteilerelement. Der Durchmesser der Stützstruktur betrug 59 mm und der Durchmesser der zentralen Verteilerplatte 17 mm.

30 Sekunden nach dem Beginn der Einströmung der Phenolphthaleinlösung als mobile Phase wurde die Zeit gestoppt und die Verteilung der Flüssigkeit auf der Oberfläche des Trennmediums bestimmt. Dabei wurde festgestellt, dass zu diesem Zeitpunkt nahezu 100 % der Oberfläche der stationären Phase bedeckt waren. Bei der Betrachtung des Verlaufs des zu trennenden Fluids durch das Trennmedium zeigte sich während der Trennzeit eine im Wesentlichen horizontale Lauffront.

### Beispiel 2

Für einen Vergleichsversuch wurde ein analoger Versuchsaufbau mit den oben beschriebenen Abmessungen und Materialien verwendet, allerdings ohne die kuppelförmige Erweiterung. Der Versuchsaufbau wies weiterhin noch Verteilungsgräten im Deckel der Vorrichtung auf, die für eine bessere Verteilung auf der Trennmediumoberfläche sorgen sollten. Auch bei diesem Beispiel wurde 30 Sekunden nach dem Beginn der Einströmung der Phenolphthaleinlösung die Zeit gestoppt und die Verteilung der Flüssigkeit auf der Oberfläche des Trennmediums bestimmt. Dabei zeigte sich eine signifikant schlechtere Flüssigkeitsverteilung oberhalb des Trennmediums entlang dem Randbereich auf der Seite des Zuleitkanals. Die ungleichmäßige Benetzung des Randbereichs nahm einen Umfang von etwa 1/3 der Trennmediumoberfläche ein.

Im Vergleich zu der erfindungsgemäßen Vorrichtung wurde überraschenderweise gefunden, dass bei einer Vorrichtung mit offener Kanalführung und Verteilerelement, jedoch ohne kuppelförmige Erweiterung (siehe Beispiel 2) eine ungleichmäßige und damit zeitverzögerte Verteilung des zu trennenden Fluids auf dem Trennmedium erfolgt. Erstaunlicherweise lieferten die Verteilungsgräten im Deckel keinen erkennbaren Beitrag hinsichtlich einer gleichmäßigen Verteilung des zu trennenden Fluids. Als Folge der ungleichmäßigen Verteilung über die Trennzeit resultierte eine schräge Lauffront des zu trennenden Fluids innerhalb des Trennmediums.

Bei der erfindungsgemäßen Vorrichtung wurde aufgrund der besonderen Konstruktion der Vorrichtung eine nahezu gleichmäßige und zeitgleiche Verteilung des zu trennenden Fluids auf dem Trennmedium erreicht. Als Ergebnis zeigte sich eine im Wesentlichen horizontale Lauffront im Trennmedium, wodurch die eingangs erwähnten Nachteile eliminiert werden können.

## Patentansprüche

1. Vorrichtung (1) zur chromatographischen Auftrennung eines Stoffgemisches umfassend,
• ein Gehäuse (2),
• einen mittleren Teilbereich (3), der das Trennmedium (4) enthält,
• einen oberen Teilbereich (5), der einen radialen Zuleitkanal (7) bis zum Zentrum des oberen Teilbereich (5) aufweist, wobei der radiale Zuleitkanal (7) nach dem Eintritt in das Gehäuseinnere zum Gehäuseinnenraum offen ist,
- einen unteren Teilbereich (6), der einen Ableitkanal aufweist,
• Trennelemente (9, 10), welche den oberen und den unteren Teilbereich (5, 6) von dem Trennmedium (4) trennen, **dadurch gekennzeichnet, dass** sich der radiale Zuleitkanal (7) im Zentrum des oberen Teilbereichs (5) kuppelförmig in Form eines flachen Kugelsegments erweitert.

2. Vorrichtung (1) gemäß Anspruch 1 **dadurch gekennzeichnet, dass** der Ableitkanal (13) sich im Zentrum des unteren Teilbereichs (6) kuppelförmig, erweitert.

3. Vorrichtung (1) gemäß einem der vorhergehenden Ansprüche **dadurch gekennzeichnet, dass** die kuppelförmige Erweiterung (8) in Form eines flachen Kugelsegments einen Kugelinnendurchmesser von 4 bis 20 mm aufweist.

4. Vorrichtung (1) gemäß einem der vorhergehenden Ansprüche **dadurch gekennzeichnet, dass** die Zu- und/oder Ableitkanäle (7, 13), die sich im Zentrum der oberen und/oder unteren Teilbereiche (5, 6) kuppelförmig oder kugelsegmentförmig erweitern, einen Lumendurchmesser von maximal 5 mm aufweisen.

5. Vorrichtung (1) gemäß einem der vorhergehenden Ansprüche **dadurch gekennzeichnet, dass** die Durchmesser der kuppelförmigen oder kugelsegmentförmigen Erweiterung (8) und der Zu- und/oder Ableitkanäle (7, 13) ein Verhältnis von 0,5/1 bis 4/1, aufweisen.

6. Vorrichtung (1) gemäß einem der vorhergehenden Ansprüche **dadurch gekennzeichnet, dass** das Gehäuse (2) einen Innendurchmesser von 3 bis 15 cm aufweist.

7. Vorrichtung (1) gemäß einem der vorhergehenden Ansprüche **dadurch gekennzeichnet, dass** das Trennmedium (4) eine Eintrittsfläche von 7 bis 180 cm² aufweist.

8. Vorrichtung (1) gemäß einem der vorhergehenden Ansprüche **dadurch gekennzeichnet, dass** das Trennmedium ein Volumen von 30 bis 1500 ml aufweist.

9. Vorrichtung (1) gemäß einem der vorhergehenden Ansprüche **dadurch gekennzeichnet, dass** das Gehäuse Außenflächen (24, 24', 24", 24''') aufweist mit einer Schichtdicke ab 1,5 mm.

10. Vorrichtung (1) gemäß einem der vorhergehenden Ansprüche **dadurch gekennzeichnet, dass** der Ableitkanal (13) nach dem Eintritt in das Gehäuseinnere zum Gehäuseinnenraum offen sind.

11. Vorrichtung (1) gemäß einem der vorhergehenden Ansprüche, **dadurch gekennzeichnet, dass** die oberen und unteren Teilbereiche (5,6) mit dem radialen Zu- und Ableitkanal (7, 13) und der kuppelförmigen oder kugelsegmentförmigen Erweiterung (8) baugleich sind.

12. Vorrichtung (1) gemäß einem der vorhergehenden Ansprüche **dadurch gekennzeichnet, dass** sich oberhalb und/oder unterhalb der kuppelförmigen, oder kugelsegmentförmigen Erweiterung (8) ein Trennelement (17) befindet, das als Sieb- oder Netzelement ausgebildet ist.

13. Vorrichtung (1) gemäß einem der vorhergehenden Ansprüche **dadurch gekennzeichnet, dass** auf das als Sieb- oder Netzelement ausgebildete Trennelement (17) eine Stützstruktur (18) aufgebracht ist, die ein Verteilerelement (19) aufweist, welches als geschlossene zentrale Fläche ausgebildet ist.

14. Verwendung der Vorrichtung (1) gemäß Ansoruch 1 zur Abreicherung von Substanzen aus einem Stoffgemisch, welches Peptide oder Proteine enthält

15. Verwendung gemäß Anspruch 14, wobei es sich bei den Peptiden oder Proteinen um Cytokine, Low-Density-Lipoproteine (LDL), toxische Fremdproteine, Antikörper, Endotoxine und/ oder Enterotoxine handelt.

## Claims

1. A device (1) for the chromatographic separation of a substance mixture comprising,
• a housing (2),
• a middle portion (3), which includes the separating medium (4),
• an upper portion (5), which has a radial supply duct (7) to the center of the upper portion (5), wherein the radial supply duct (7) is open towards the housing interior after the entry into the housing interior,
• a lower portion (6), which has a discharge duct,
• separating elements (9, 10), which separate the upper and the lower portion (5, 6) from the separating medium (4), **characterized in that** the radial supply duct (7) widens in a dome shape in the form of a flat ball segment in the center of the upper portion (5).

2. The device (1) according to claim 1, **characterized in that** the discharge duct (13) widens in a dome shape in the center of the lower portion (6).

3. The device (1) according to one of the preceding claims, **characterized in that** the dome-shaped widening (8) in the form of a flat ball segment has an inner ball diameter of between 4 and 20 mm.

4. The device (1) according to one of the preceding claims, **characterized in that** the supply and/or discharge ducts (7, 13), which widen in a dome shape or ball segment shape in the center of the upper and/or lower portions (5, 6), have a lumen diameter of maximally 5 mm.

5. The device (1) according to one of the preceding claims, **characterized in that** the diameters of the dome-shaped or ball segment-shaped widening (8) and of the supply and/or discharge ducts (7, 13) have a ratio of between 0.5/1 and 4/1.

6. The device (1) according to one of the preceding claims, **characterized in that** the housing (2) has an inner diameter of between 3 and 15 cm.

7. The device (1) according to one of the preceding claims, **characterized in that** the separating medium (4) has an entry surface of between 7 and 180

8. The device (1) according to one of the preceding claims, **characterized in that** the separating medium has a volume of between 30 and 1500 ml.

9. The device (1) according to one of the preceding claims, **characterized in that** the housing has outer surfaces (24, 24', 24", 24''') comprising a layer thickness starting at 1.5 mm.

10. The device (1) according to one of the preceding claims, **characterized in that**, after the entry into the housing interior, the discharge duct (13) is open towards the housing interior.

11. The device (1) according to one of the preceding claims, **characterized in that** the upper and lower portions (5, 6) comprising the radial supply and discharge duct (7, 13) and the dome-shaped or ball segment-shaped widening (8) of identical construction.

12. The device (1) according to one of the preceding claims, **characterized in that** a separating element (17), which is configured as screen or mesh, is located above and/or below the dome-shaped or ball segment-shaped widening (8) .

13. The device (1) according to one of the preceding claims, **characterized in that** a support structure (18), which has a distributor element (19), which is configured as closed central surface, is applied to the separating element (17), which is configured as screen or mesh element.

14. Use of the device (1) according to claim 1 for the depletion of substances from a substance mixture, which includes peptides or proteins.

15. The use according to claim 14, whereby the peptides or proteins are cytokines, low-density lipoproteins (LDL), toxic foreign proteins, antibodies, endotoxins and/or enterotoxins.

## Revendications

1. Dispositif (1) destiné à la séparation chromatique d'un mélange de substances, comprenant,
• un boîtier (2),
• une zone partielle (3) centrale, contenant le milieu de séparation (4),
• une zone partielle (5) supérieure, laquelle comporte un canal d'amenage (7) radial jusqu'au centre de la zone partielle (5) supérieure, après l'entrée dans l'intérieur du boîtier, le canal d'amenage (7) radial étant ouvert jusqu'à l'espace intérieur du boîtier,
• une zone partielle (6) inférieure, laquelle comporte un canal d'évacuation,
• des éléments séparateurs (9, 10), lesquels séparent les zones partielles (5, 6) inférieure et supérieure du milieu de séparation (4), **caractérisé en ce qu'**au centre de la zone partielle (5) supérieure, le canal d'amenage (7) radial s'évase en forme de coupole sous la forme d'un segment sphérique plat.

2. Dispositif (1) selon la revendication 1, **caractérisé en ce que** le canal d'évacuation (13) s'évase en forme de coupole au centre de la zone partielle (6) inférieure.

3. Dispositif (1) selon l'une quelconque des revendications précédentes, **caractérisé en ce que** l'évasement (8) en forme de coupole sous la forme d'un segment sphérique plat présente un diamètre intérieur de sphère de 4 à 20 mm.

4. Dispositif (1) selon l'une quelconque des revendications précédentes, **caractérisé en ce que** les canaux d'amenage et/ou d'évacuation (7, 13) qui s'évasent en forme de coupole ou en forme de segment sphérique au centre des zones partielles (5, 6) supérieure et/ou inférieure présentent un diamètre d'ouverture d'un maximum de 5 mm.

5. Dispositif (1) selon l'une quelconque des revendications précédentes, **caractérisé en ce que** les diamètres de l'évasement (8) en forme de coupole ou en forme de segment sphérique et des canaux d'amenage et/ou d'évacuation (7, 13) présentent un rapport de 0,5/1 à 4/1.

6. Dispositif (1) selon l'une quelconque des revendications précédentes, **caractérisé en ce que** le boîtier (2) présente un diamètre intérieur de 3 à 15 cm.

7. Dispositif (1) selon l'une quelconque des revendications précédentes, **caractérisé en ce que** le milieu de séparation (4) présente une surface d'entrée de 7 à 180 cm².

8. Dispositif (1) selon l'une quelconque des revendications précédentes, **caractérisé en ce que** le milieu de séparation présente un volume de 30 à 1500 ml.

9. Dispositif (1) selon l'une quelconque des revendications précédentes, **caractérisé en ce que** le boîtier présente des surfaces extérieures (24, 24', 24", 24''') d'une épaisseur de couche à partir de 1,5 mm.

10. Dispositif (1) selon l'une quelconque des revendications précédentes, **caractérisé en ce qu'**après l'entrée dans l'intérieur du boîtier, le canal d'évacuation (13) est ouvert jusqu'à l'espace intérieur du boîtier.

11. Dispositif (1) selon l'une quelconque des revendications précédentes, **caractérisé en ce que** les zones partielles (5,6) supérieure et inférieure sont de configuration identique à celles du canal radial d'amenage et d'évacuation (7, 13) et de l'évasement (8) en forme de coupole ou en forme de segment sphérique.

12. Dispositif (1) selon l'une quelconque des revendications précédentes, **caractérisé en ce qu'**au-dessus et/ou en-dessous de l'évasement (8) en forme de coupole ou en forme de segment sphérique se trouve un élément séparateur (17) qui est conçu sous la forme d'un élément en tamis ou d'un élément en filet.

13. Dispositif (1) selon l'une quelconque des revendications précédentes, **caractérisé en ce que** sur l'élément séparateur (17) sous la forme d'un élément en tamis ou d'un élément en filet est montée une structure d'appui (18), qui comporte un élément distributeur (19), lequel est conçu sous la forme d'une surface centrale close.

14. Utilisation du dispositif (1) selon la revendication 1 pour administrer des substances d'un mélange de substances lequel contient des peptides ou des protéines.

15. Utilisation selon la revendication 14, les peptides ou les protéines étant des cytokines, des lipoprotéines de basse densité (LDL), des protéines étrangères toxiques, des anticorps, des endotoxines et/ou des entérotoxines.
